# EUROPÄISCHE PATENTANMELDUNG

(11) **EP 1 938 688 A1**
(43) Veröffentlichungstag der Anmeldung: **02.07.2008**
(21) Anmeldenummer: 06026144.3
(22) Anmeldetag: 18.12.2006
(51) Int. Cl.: A01N 57/12, A01N 47/40, A01N 47/06, A01P 7/04

(54) **Penetrationsförderer für Insektizide**

(71) Anmelder: Bayer CropScience AG, 40789 Monheim (DE)
(72) Erfinder: Die Erfindernennung liegt noch nicht vor

(57) **Zusammenfassung**

Die Erfindung betrifft das Gebiet des chemischen Pflanzenschutzes, insbesondere die Verwendung einer speziellen Verbindung als Penetrationsförderer für agrochemische Wirkstoffe aus der Gruppe der Insektizide sowie Pflanzenschutzmittel enthaltend diese Verbindung. Bei der Verbindung handelt es sich um Tributoxyethylphosphat (TBEP).

## Beschreibung

Die Erfindung betrifft das Gebiet des chemischen Pflanzenschutzes, insbesondere die Verwendung einer speziellen Verbindung als Penetrationsförderer für agrochemische Wirkstoffe aus der Gruppe der Insektizide sowie Pflanzenschutzmittel enthaltend diese Verbindung. Bei der Verbindung handelt es sich um Tributoxyethylphosphat (CAS Regno: 4712-55-4; im folgenden als TBEP bezeichnet).

Die Förderung der Penetration von Insektiziden in Pflanzen wird durch 'Penetrationsförderer' bewirkt. Unter dem Begriff Penetrationsförderer werden Verbindungen verstanden, welche die Aufnahme von Insektiziden durch die Kutikula einer Pflanze in die Pflanze fördern, d.h. die Aufnahmegeschwindigkeit beschleunigen und/oder die aufgenommene Menge des Wirkstoffs in die Pflanze erhöhen, damit die Insektizide wirksam werden können nach Befall der Pflanze durch die Schadorganismen.

Stoffe, welche die Penetration von Insektiziden durch die Kutikula der Pflanze erhöhen sind wertvolle Hilfsstoffe im chemischen Pflanzenschutz. Obgleich bereits verschiedene Stoffklassen als Penetrationsförderer bekannt sind (siehe z.B. WO 2005/104844 A), besteht unter verschiedenen Gesichtspunkten immer noch ein Bedarf an weiteren Verbindungen mit solchen Eigenschaften.

Aufgabe der Erfindung ist es daher, weitere Stoffe mit penetrationsfördernden Eigenschaften für agrochemische Wirkstoffe bereitzustellen.

Es wurde nun überraschend gefunden, dass sich das Lösungsmittel TBEP im Gegensatz zu vielen anderen Lösungsmitteln in bestimmten niedrigeren Aufwandmengen und bestimmten Mischungsverhältnissen zum Wirkstoff zur Erhöhung der Penetration von Insektiziden durch die Kutikula der Pflanze und damit zur biologischen Wirkungssteigerung von Pflanzenschutzmitteln eignet.

TBEP ist schon als Lösungsmittel in entsprechend hohen Aufwandmengen im Pflanzenschutz bekannt, wie in Herbiziden (siehe z.B. EP 1251736 B1, EP 1164842 B1) und Insektiziden (siehe z.B. JP 08291004 A, US 5674517 A). Aus GB 2022070 A ist TBEP bekannt zur Entblätterung, wobei es in Verhältnissen von (TBEP : Wirkstoff) 2 :1 bis 4 : 1 den zu herbiziden Wirkstoffen zugesetzt wurde. Auf dem Gebiet der Fungizide erscheint die Verwendung von TBEP noch weitgehend unbekannt zu sein.

Gegenstand der Erfindung ist daher ein Pflanzenschutzmittel, enthaltend die Komponenten
(A) einen oder mehrere Wirkstoffe aus der Gruppe der Insektizide,
(B) Tributoxyethylphosphat (TBEP) in Dosierungen von 2, 5 bis 150,0 g/ha,
(C) gegebenenfalls einen oder mehrere Emulgatoren, vorzugsweise aus der Gruppe der ionischen und nicht-ionischen Emulgatoren und deren Gemische mit HLB-Werten von 10 bis 17, und
(D) gegebenenfalls einen oder mehrere weitere Hilfs - und Zusatzstoffe.

Weiterer Gegenstand der Erfindung ist die Verwendung der Komponenten des hier beschriebenen Pflanzenschutzmittels, welches auf die von den Schadorganismen befallenen Pflanzen appliziert wird.

Gegenstand der Erfindung ist auch ein Verfahren zur Förderung der Penetration, wobei man die Komponenten
(A) einen oder mehrere Wirkstoffe aus der Gruppe der Insektizide,
(B) Tributoxyethylphosphat (TBEP) in Dosierungen von 2, 5 bis 150,0 g/ha und
(C) gegebenenfalls einen oder mehrere Emulgatoren, vorzugsweise aus der Gruppe der ionischen und nicht-ionischen Emulgatoren und deren Gemische mit HLB-Werten von 10 bis 17,
gleichzeitig oder sequentiell auf die von den Schadorganismen befallenen Pflanzen appliziert.

Ebenso Gegenstand der Erfindung ist die Verwendung des hier beschriebenen Verfahrens, wobei man die Komponenten gleichzeitig oder sequentiell auf die von den Schadorganismen befallenen Pflanzen appliziert.

Da der Wirkmechanismus von TBEP als Penetrationsförderer grundsätzlich unabhängig von der Art des eingesetzten agrochemischen Wirkstoffs ist, kommen alle Wirkstoffe in Frage aus der Gruppe der Insektizide, deren biologische Wirksamkeit gegen Insekten im weiteren Sinne, im folgenden als Schadorganismen bezeichnet, durch erhöhtes Eindringen in eine Kulturpflanze gesteigert werden kann.

Vorzugsweise genannt seien Wirkstoffe aus der Gruppe der Insektizide, umfassend auch Akarizide, Nematizide, Molluskizide, Rodentizide, Repellents, sowie Pflanzennährstoffe, die über systemische Eigenschaften verfügen, sowie als Kombinationspartner in Frage kommende Kontaktmittel. Im folgenden beinhaltet der Begriff Insektizide sowohl Insektizide wie auch Akarizide, Nematizide und Molluskizide, Rodentizide und Repellents soweit aus dem Zusammenhang nichts anderes hervorgeht.

Weiterhin bevorzugt innerhalb der oben genannten Gruppen sind systemische Wirkstoffe, d.h. solche die von der Pflanze durch die Blätter oder über die Wurzeln aufgenommen und im Saftstrom, dem Transportsystem oder Pflanze, weitergeleitet werden. Besonders bevorzugt sind solche Wirkstoffe, die einen Log P Wert von ≤ 4 aufweisen (bestimmt gemäß EEC-Directive 79/831 Annex V. A8 durch HPLC, Gradientenmethode, Acetronitril / 0,1 % wässrige Phosphorsäure), insbesondere solche mit einem Log P Wert von ≤ 4 und ≥ 0,1.

Beispiele für einzelne Wirkstoffe aus der Gruppe der Insektizide, umfassend auch Akarizide und/oder Nematizide sind:
Acetylcholinesterase (AChE) Inhibitoren
   Carbamate,
   zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metamsodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate Organophosphate,
   zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker Pyrethroide,
   zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
   DDT
   Oxadiazine,
   zum Beispiel Indoxacarb
   Semicarbazon,
   zum Beispiel Metaflumizon (BAS3201)
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap
Acetylcholin-Rezeptor-Modulatoren
   Spinosyne,
   zum Beispiel Spinosad
GABA-gesteuerte Chlorid-Kanal-Antagonisten
   Organochlorine,
   zum Beispiel Camphechlor, Chlordane, Endosulfan, Gamma-HCH, HCH,
   Heptachlor, Lindane, Methoxychlor
   Fiprole,
   zum Beispiel Acetoprole, Ethiprole, Fipronil, Pyrafluprole, Pyriprole, Vaniliprole
Chlorid-Kanal-Aktivatoren
   Mectine,
   zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
   zum Beispiel Chromafenozide, Halofenozide, Methoxyfenozide, Tebufenozide
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
   zum Beispiel Azocyclotin, Cyhexatin, Fenbutatin-oxide
Entkoppler der oxidativen Phoshorylierung durch Unterbrechung des H-Protongradienten
   Pyrrole,
   zum Beispiel Chlorfenapyr
Dinitrophenole,
   zum Beispiel Binapacyrl, Dinobuton, Dinocap, DNOC
Site-I-Elektronentransportinhibitoren
   METI's,
   zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxin-Analoge,
   zum Beispiel Thiocyclam hydrogen oxalate, Thiosultap-sodium
Agonisten des Ryanodin-Rezeptors,
   Benzoesäuredicarboxamide,
   zum Beispiel Flubendiamid
   Anthranilamide,
   zum Beispiel DPX E2Y45 (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Fraßhemmer,
   zum Beispiel Cryolite, Flonicamid, Pymetrozine
   Milbenwachstumsinhibitoren,
   zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Die vorstehend aufgeführten Insektizide (Akarizide, Nematizide) sind z.B. bekannt aus "The Pesticide Manual", 12. Auflage (2000) bis 14. Auflage (2006), The British Crop Protection Council oder den nach den einzelnen Wirkstoffen aufgeführten Literaturstellen.

Bevorzugte Insektizide sind solche aus der Gruppe der Acetylcholin-Rezeptor-Agonisten/-Antagonisten, vorzugsweise Chloronicotinyle (Neonicotinoide), wie Acetamiprid, Clothianidin, Dinotefuran, Imidacloprid, Nitenpyram, Nithiazine, Thiacloprid, Thiamethoxam, insbesondere Imidacloprid und Thiacloprid und aus der Gruppe der Inhibitoren der Fettsynthese, vorzugsweise Tetramsäuren, wie Spirotetramat.

Die erfindungsgemäßen Pflanzenschutzmittel enthalten in der Regel 0,01 bis 99 Gew.-%, insbesondere 0,1 bis 95 Gew.-%, der Wirkstoffe aus der Gruppe der Insektizide. Die flächenbezogenen Aufwandmengen der Komponente (A) liegen im allgemeinen zwischen 10 und 2000 g AS/ha (AS = Aktivsubstanz, d. h. Aufwandmenge bezogen auf den aktiven Wirkstoff), bevorzugt zwischen 50 und 300 g AS/ha.

Tributoxyethylphosphat (TBEP) als Komponente (B) hat die CAS Regno: 4712-55-4 und wird unter diesem Eintrag in der Fachliteratur in seinen weiteren Eigenschaften ausführlich beschrieben.

Der Gehalt an TBEP (B) in den erfindungsgemäßen Pflanzenschutzmitteln ist abhängig von der flächenbezogenen Applikationsmenge pro Hektar (ha) und muss daher entsprechend angepasst werden. Dies gilt auch für die Herstellung einer Applikationslösung, beispielsweise einer Spritzbrühe, beim Einsatz des erfindungsgemäßen Verfahrens. Die flächenbezogenen Applikationsmengen für TBEP (B) liegen zwischen 0,5 und 150 g/ha, bevorzugt 1 bis 50 g/ha, besonders bevorzugt 5 bis 20 g/ha, wobei das Volumen der Spritzbrühe in der Regel zwischen 100-1000 Uha liegt.

Gegebenenfalls kann als Komponente (C) bei der Herstellung des erfindungsgemäßen Pflanzenschutzmittels und/oder der Applikation des erfindungsgemäßen Verfahrens, bevorzugt in Form von Spritzbrühen, die Zugabe eines oder mehrerer Emulgatoren notwendig sein. Geeignete Emulgatoren sind aus der Gruppe der ionischen und nicht-ionischen Emulgatoren und deren Gemische mit HLB-Werten von 10 bis 17 (z.B. Emulgator 1371 B). Sie können entweder direkt und/oder durch die Formulierung der Komponenten (A) und/oder (B) zugesetzt werden.

Als weitere Hilfs - und Zusatzstoffe (Komponente D), die in den erfindungsgemäßen, vorzugsweise flüssige Formulierungen enthalten sein können, kommen alle üblichen Formulierhilfsmittel in Frage, wie organische Solventien, Entschäumer, von Komponente (C) verschiedene Emulgatoren, Dispergiermittel, Konservierungsmittel, Säuren und Basen, Farbstoffe, Füllstoffe und auch Wasser.

Als organische Solventien kommen alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso^{®}, Pflanzen- und Mineralöle, wie Testbenzin, Petroleum, Alkylbenzole und Spindelöl, weiterhin Propylencarbonat, Tetrachlormethan, Chloroform, Methylenchlorid und Dichlormethan, außerdem Ester, wie Ethylacetat, Lactate ferner Lactone, wie Butyrolacton, außerdem Lactame, wie N-Methylpyrrolidon, N-Octylpyrrolidon, N-Dodecylpyrrolidon N-Octylcaprolactam und N-Methylcaprolactam, γ-Butyrolacton, Dimethylformamid sowie Tributylphosphat.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80^{®}.

Als von Komponente (C) verschiedene Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Endgruppen-verschlossene und nicht Endgruppen-verschlossene alkoxylierte lineare und verzweigte, gesättigte und ungesättigte Fettsäuren, Alkylsulfonate, Alkylsulfate, Alkylethersulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate.

Als Dispergiermittel kommen alle üblicherweise in Pflanzenschutzmitteln für diesen Zweck eingesetzten Substanzen in Betracht. Vorzugsweise genannt seien, neben den oben unter von Komponente (C) verschiedenen Emulgatoren genannten Verbindungen, natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Ligninsulfonate, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol^{®} und Proxel^{®}.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 10 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Der Gehalt an den einzelnen Komponenten in den erfindungsgemäßen Pflanzenschutzmitteln und die flächenbezogenen Applikationsmenge beim Einsatz des erfindungsgemäßen Verfahrens kann innerhalb eines größeren Bereichs variiert werden.

Zu den für die erfindungsgemäßen Pflanzenschutzmitteln mit den Komponenten (A) und (B) sowie gegebenenfalls den Komponenten (C) und/oder (D) in Frage kommenden Formulierungstypen gehören prinzipiell alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, "Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Daneben kommen für die einzelnen Komponenten des erfindungsgemäßen Verfahrens prinzipiell auch alle Formulierungstypen in Frage.

Beispiele für Formulierungstypen sind die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; EC Emulsifiable concentrate; ED Electrochargeable liquid; EG Emulsifiable Granule; EO Emulsion, water in oil; EP emulsifiable powder; ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD Oil dispersion; OF Oil miscible flowable concentrate/oil miscible suspension; OL Oil miscible liquid; OP Oil dispersible powder; PA Paste; PC Gel or paste concentrate; PO Pour-on; PR Plant rodlet; PT Pellet; SA Spot-on; SC suspension concentrate; SD suspension concentrate for direct application; SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen OD Oil dispersion; DC (GCPF-Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize); FS (GCPF-Formulierungskode für Mehrphasenkonzentrat zur Saatgutbehandlung); EO (GCPF-Formulierungskode für Wasser in ÖI Emulsion); ME (GCPF-Formulierungskode für Mikroemulsion); SE (GCPF-Formulierungskode für Suspoemulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Öldispersionen (syn. oil dispersion; Formulierungstyp OD) und Emulsionskonzentrate (Formulierungstyp EC).

In Spritzpulvern beträgt die Wirkstoffkonzentration z. B. etwa 10 bis 90 Gew.-%; der Rest zu 100 Gew.-% besteht aus TBEP (B) und üblichen Formulierungsbestandteilen (Emulgator, Hilfs- und Zusatzstoffen), welches für alle Formulierungen gilt. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%. Bei Öldispersionen kann die Wirkstoffkonzentration etwa 1 bis 50, vorzugsweise 3 bis 30 Gew.-% betragen.

Weiterhin Gegenstand der Erfindung ist ein Verfahren zur Bekämpfung von Schadorganismen, vorzugsweise schädlichen Tieren, vorzugsweise schädlichen Arthropoden, wie Insekten und Spinnentieren, Helminthen und Mollusken, besonders bevorzugt schädlichen Arthropoden und Helminthen, wobei das erfindungsgemäße Pflanzenschutzmittel bzw. die im erfindungsgemäßen Verfahren eingesetzten Komponenten, bevorzugt in einer wirksamen Menge, auf die von den Schadorganismen befallenen Pflanzen appliziert wird.

Die Erfindung betrifft weiterhin auch erfindungsgemäße Pflanzenschutzmittel und Verfahren, enthaltend mindestens die Komponenten (A) und (B), die in einer bevorzugten Ausführungsform überadditive Effekte (Synergismus) zeigen. Aufgrund der verbesserten Kontrolle der Schadorganismen durch die erfindungsgemäßen Pflanzenschutzmittel und Verfahren wird es möglich, die Aufwandmenge zu senken und/oder die Sicherheitsmarge zu erhöhen. Beides ist sowohl ökonomisch als auch ökologisch sinnvoll. Die Wahl der von den Komponenten (A) und (B) einzusetzenden Mengen und das Verhältnis der Komponenten (A) : (B) sind dabei von einer ganzen Reihe von Faktoren abhängig.

Die Herstellung der erfindungsgemäßen Pflanzenschutzmittel erfolgt z.B. in der Weise, dass man die Komponenten in den jeweils gewünschten Verhältnissen miteinander vermischt. Handelt es sich bei dem Insektizid, im Folgenden als agrochemischer Wirkstoff bezeichnet, um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Zur Herstellung erfindungsgemäßer Pflanzenschutzmittel geht man im Allgemeinen so vor, dass man TBEP (B) mit einem oder mehreren der agrochemischen Wirkstoffe (A) sowie gegebenenfalls mit dem Emulgator (C) und den Hilfs- und Zusatzstoffen (D) vermischt. Die Reihenfolge, in der die Komponenten miteinander vermischt werden, hängt vom jeweiligen Formulierungstyp ab.

Zur Durchführung des Herstellungsverfahrens kommen übliche Geräte in Betracht, die zur Herstellung von agrochemischen Formulierungen eingesetzt werden.

Zum Einsatz des erfindungsgemäßen Pflanzenschutzmittels und zur Durchführung des erfindungsgemäßen Verfahrens können als Applikationsformen alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stengel, Stamm, Blatt), wie beispielsweise Stamminjektion bei Bäumen oder Stengelbandagen bei perennierenden Pflanzen, und eine Reihe spezieller indirekter Applikationsverfahren.

Die jeweilige flächen- und/oder objektbezogene Aufwandmenge der erfindungsgemäßen Pflanzenschutzmittel unterschiedlichster Formulierungstypen und des erfindungsgemäßen Verfahrens zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter ÖI pro Hektar bei der ,Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.-% bis 99 Gew.-%, besonders bevorzugt von 0,1 Gew.-% bis 90 Gew.-%.

Die erfindungsgemäßen Pflanzenschutzmittel unterschiedlichster Formulierungstypen, wie auch die zur Durchführung des erfindungsgemäßen Verfahrens notwendigen Komponenten, können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen Pflanzenschutzmitteln unterschiedlichster Formulierungstypen, wie auch die zur Durchführung des erfindungsgemäßen Verfahrens notwendigen Komponenten, kann innerhalb eines größeren Bereiches variiert werden. Sie richtet sich nach den jeweiligen Insektiziden und nach deren Gehalt in den Formulierungen.

Bei dem erfindungsgemäßen Verfahren zur Förderung der Penetration von Wirkstoffen in Pflanzen wird das zu verwendende TBEP (B) in der Regel zusammen mit dem bzw. den Wirkstoffen (A) oder unmittelbar hintereinander ausgebracht, vorzugsweise in Form einer Spritzbrühe, welche TBEP (B) in erfindungsgemäßen Mengen und den oder die Wirkstoffe (A) in wirksamen Mengen und gegebenenfalls einen oder mehrere Emulgatoren (C) enthält. Zusätzlich können weitere übliche Hilfs- und Zusatzmittel zugesetzt werden. Die Spritzbrühe wird bevorzugt auf Basis von Wasser und/oder einem Öl, z.B. einem hochsiedenden Kohlenwasserstoff wie Kerosin oder Paraffin hergestellt. Dabei können die Komponenten für das erfindungsgemäße Verfahren entweder als Tankmischung oder über eine "FertigFormulierung" ("ready-to-use formulation"; Co-Formulierung) realisiert werden.

Im Falle von schädlichen Tieren ist das Aufbringen auf vor diesen Schadorganismen zu schützende Pflanzen bevorzugt. Verfahren zur therapeutischen Anwendung bei Mensch und Tier sind dabei ausgeschlossen.

Die erfindungsgemäß behandelten Pflanzen sind alle Arten von Kulturpflanzen. Was den Schutz von Kulturpflanzen durch Applikation von Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten bevorzugt.

Die erfindungsgemäßen Pflanzenschutzmittel, sowie die erfindungsgemäßen Verfahren, weisen eine Reihe von Vorteilen auf. So wird die allgemeine Penetration der Wirkstoffe in das Pflanzengewebe durch TBEP deutlich verbessert. Das schnellere Einsetzen der Penetration bewirkt somit auch eine höhere Regenfestigkeit. Gleichzeitig ist die Penetration bei niedrigeren Temperaturen (beispielsweise kleiner 15° C) verbessert. Im Hinblick auf die Kulturpflanzenverträglichkeit erwies sich in Versuchen TBEP als verträglicher als andere Alkylester-Additive. Insgesamt ermöglicht die Verwendung von TBEP damit Einsparungen an den eingesetzten Wirkstoffen. Daneben ist TBEP weniger belastend für die Umwelt, da es über eine reduzierte Flüchtigkeit verfügt.

Die Erfindung wird durch die Beispiele näher erläutert ohne sie darauf zu beschränken.

### Beispiele

### Penetrationstest

In diesem Test wurde die Penetration von Wirkstoffen durch enzymatisch isolierte Kutikeln von Apfelbaumblättern gemessen. Die Kutikeln repräsentieren alle grünen Pflanzenteile, wie Blattspreite, Blattstiel, Stengel, Stamm, Hypokotyl und viele Früchte.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 Gew.-%ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen platziert und mit einem ebenfalls gefetteten Ring verschlossen. Die Anordnung wurde so gewählt, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 10 µl einer Spritzbrühe der in den Beispielen genannten Zusammensetzung auf die Außenseite einer Kutikula appliziert.

In den Spritzbrühen wurden jeweils die unten in den Tabellen aufgelisteten Lösungsmittel (Leitungswasser oder einem Gemisch aus Aceton 20 Gew.-% / Leitungswasser 80 Gew.-%) verwendet.

Nach dem Auftragen der Spritzbrühen ließ man jeweils das Lösungsmittel verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 20 bzw. 25 °C statt. Die Wirkstoffpenetration wurde mit radioaktiv markiertem Wirkstoff gemessen.

**Tabelle 1: Penetration* von Thiacloprid (Insektizid) mit TBEP (emulgiert) im Vergleich zur Kontrolle***

| Wirkstoff ohne/mit TBEP | % Penetration nach 3 h** | % Penetration nach 24 h** |
|---|---|---|
| 0,18 g/lThiacloprid (A) ohne TBEP | 0,1 | 0,8 |
| 0,18 g/lThiacloprid (A) + 0,21 g/lTBEP (B) + 0,09 g/lEmulgator 1371 B (C) | 3,9 | 6,6 |
| 0,18 g/lThiacloprid (A) + 0,7 g/lTBEP (B) + 0,3 g/lEmulgator 1371 B (C) | 23,3 | 41,5 |
| 0,18 g/lThiacloprid (A) + 2,1 g/l TBEP (B) + 0,9 g/l Emulgator 1371 B (C) | 47,2 | 89,3 |

| | | |
|---|---|---|
| * Wirkstoff gelöst in Leitungswasser; ** Mittelwerte aus 4-8 Wiederholungen für die Penetration durch Apfelblattkutikeln (Temperatur = 20°C, rel. Luftfeuchte 60 %); Thiacloprid (Hersteller Bayer CropScience). | | |

**Tabelle 2: Förderung der Penetration verschiedener Insektizide* durch TBEP im Vergleich zur Kontrolle**

| Wirkstoff ohne/mit TBEP | % Penetration nach 3h** | % Penetration nach 24h** |
|---|---|---|
| Insektizid 0,3 g/l Thiacloprid (A) | 0,1 | 1,0 |
| 0,3 g/l Thiacloprid (A) + 2,0 g/l TBEP (B) | 43,5 | 90 |
| Insektizid 0,3 g/l Spirotetramat (A) | 0 | 0,3 |
| 0,3 g/l Spirotetramat (A) + 2,0 g/l TBEP (B) | 11,5 | 38,1 |

| | | |
|---|---|---|
| * Wirkstoff gelöst in Leitungswasser (Thiacloprid) oder einem Gemisch aus Aceton/ Leitungswasser (20/80 Gew.-%; Spirotetramat); ** Mittelwerte aus 4-8 Wiederholungen für die Penetration durch Apfelblattkutikeln (Temperatur = 20-25°C, rel. Luftfeuchte 56-60 %); Thiacloprid (Hersteller Bayer CropScience), Spirotetramat (*cis*-3-(2,5-dimethylphenyl)-8-methoxy-2-oxo-1-azaspiro[4.5]dec-3-en-4-yl ethyl carbonate, Hersteller Bayer CropScience). | | |

Wie anhand der in den Tabellen aufgeführten Beispiele zu erkennen ist, führt TBEP zu einer beträchtlichen Aufnahmesteigerung der Wirkstoffe.

## Patentansprüche

1. Pflanzenschutzmittel, enthaltend die Komponenten
(A) einen oder mehrere Wirkstoffe aus der Gruppe der Insektizide,
(B) Tributoxyethylphosphat (TBEP) in Dosierungen von 2, 5 bis 150,0 g/ha,
(C) gegebenenfalls einen oder mehrere Emulgatoren, vorzugsweise aus der Gruppe der ionischen und nicht-ionischen Emulgatoren und deren Gemische mit HLB-Werten von 10 bis 17, und
(D) gegebenenfalls einen oder mehrere weitere Hilfs - und Zusatzstoffe.

2. Verwendung der Komponenten eines Pflanzenschutzmittels gemäß Anspruch 1, welches auf die von den Schadorganismen befallenen Pflanzen appliziert wird.

3. Herstellung des Pflanzenschutzmittels gemäß Anspruch 1, wobei man die Komponenten in den jeweils gewünschten Verhältnissen miteinander vermischt.

4. Verfahren zur Bekämpfung von Schadorganismen, wobei man die Komponenten eines Pflanzenschutzmittels gemäß Anspruch 1, auf die von den Schadorganismen befallenen Pflanzen appliziert wird.

5. Verfahren zur Förderung der Penetration, wobei man die Komponenten
(A) einen oder mehrere Wirkstoffe aus der Gruppe der Insektizide,
(B) Tributoxyethylphosphat (TBEP) in Dosierungen von 2, 5 bis 150,0 g/ha und
(C) gegebenenfalls einen oder mehrere Emulgatoren, vorzugsweise aus der Gruppe der ionischen und nicht-ionischen Emulgatoren und deren Gemische mit HLB-Werten von 10 bis 17,
gleichzeitig oder sequentiell auf die von den Schadorganismen befallenen Pflanzen appliziert.

6. Verwendung des Verfahrens gemäß Anspruch 5, wobei man die Komponenten gleichzeitig oder sequentiell auf die von den Schadorganismen befallenen Pflanzen appliziert.

7. Verfahren zur Bekämpfung von Schadorganismen, wobei das Verfahren gemäß Anspruch 5, auf die von den Schadorganismen befallenen Pflanzen appliziert wird.
